# EUROPEAN PATENT SPECIFICATION

(11) **EP 2 833 458 B1**
(45) Date of publication and mention of the grant of the patent: **15.03.2017**
(21) Application number: 13770202.3
(22) Date of filing: 29.03.2013
(51) Int. Cl.: H01M 10/04, B65H 29/06, B65H 29/24, B65H 29/40, B65H 29/50, H01M 8/24, H01M 6/00, H01M 10/0525, H01M 10/0585

(54) **LAMINATION APPARATUS AND LAMINATION METHOD**
LAMINIERUNGSVORRICHTUNG UND LAMINIERUNGSVERFAHREN
APPAREIL DE STRATIFICATION ET PROCÉDÉ DE STRATIFICATION

(30) Priority: 30.03.2012 JP 2012081526
(43) Date of publication of application: 04.02.2015
(73) Proprietor: Nagano Automation Co., Ltd., Ueda-shi, Nagano 386-0406 (JP)
(72) Inventor: YAMAURA, Seiji, Ueda-shi, Nagano 386-0406 (JP); MIYAZAKI, Tsukasa, Ueda-shi, Nagano 386-0406 (JP)
(74) Representative: Körber, Martin Hans
(86) International application number: PCT/JP2013/002188
(87) International publication number: WO 2013/145783

(56) References cited:
- WO-A1-2008/139561
- JP-A- H0 714 571
- JP-A- S63 164 175
- JP-A- 2001 114 224
- JP-A- 2003 173 946
- JP-A- 2008 282 756
- JP-A- 2008 282 756
- JP-A- 2011 129 255
- JP-A- 2012 227 131

## Description

### TECHNICAL FIELD

The present invention relates to an apparatus that manufactures a layered stack including a positive electrode sheet, a negative electrode sheet, and a separator, and to a method that uses such apparatus.

### BACKGROUND ART

Japanese Laid-Open Patent Publication No. 2008-282756 (Document 1) discloses the provision of a method of manufacturing and a manufacturing apparatus for a layered stack of a stacked (laminated) cell which have a high manufacturing yield and high manufacturing efficiency by substantially preventing the mixing in of dust and coating powder. The manufacturing apparatus for a layered stack cell in Document 1 is constructed so that vacuum chucking pads, which are a suction apparatus, do not vacuum chuck a negative electrode foil and a positive electrode foil directly and instead definitely chuck and convey such foils with a separator in between. Also, by fixing the respective vacuum chucking pads to a conveying handler that rotationally moves, reciprocally swings, or reciprocally moves in a straight line, the number of driving apparatuses required to move the vacuum chucking pads between the respective stages, which are a separator supplying stage, a negative electrode foil supplying stage, a positive electrode foil supplying stage, and a stacking stage, is reduced, the number of locations where dust protection measures are necessary is also reduced, and if possible such measures are implemented at only one location. The movement path of the vacuum chucking pads in such case will be circumferential, arc-shaped, or linear, and each stage will be disposed along such movement path.

### DISCLOSURE OF THE INVENTION

The electrode structure (layered stack) used in a lithium cell or the like is manufactured by stacking or laminating a plurality of positive electrode plates (positive electrode sheets, positive electrode foils) and negative electrode plates (negative electrode sheets, negative electrode foils) with separators in between. For this reason, there is demand for an apparatus capable of precisely stacking positive electrode plates, negative electrode plates, and separators while separately picking up a separator, a positive electrode sheet, and a negative electrode sheet. With the manufacturing apparatus disclosed in Japanese Laid-Open Patent Publication No. 2008-282756, the negative electrode foils and positive electrode foils are not directly vacuum chucked and are instead vacuum chucked via separators. This means that it is not possible to manufacture an electrode structure using separators with low air permeability.

A first aspect of the present invention is a stacking apparatus including: a pickup unit including a plurality of suction units that pass a first position, a second position, a third position, and a fourth position, which are disposed at equal intervals in a first direction around a circumference, in order; a first supplying unit that supplies a first electrode sheet to the first position; a second supplying unit that supplies a sheet-like separator to the second position; a third supplying unit that supplies a second electrode sheet to the third position; a discharging unit that discharges, from the fourth position, a layered stack in which the first electrode sheet and the second electrode sheet have been alternately stacked (laminated) with the separator in between; and a driving unit that moves the respective suction units of the plurality of suction units in order to the first position, the second position, the third position, and the fourth position and also causes up-down movement of the respective suction units. The driving unit drives the suction units to perform moving up and down that includes following operations.

A first operation moves the suction units that have arrived at the first position, the second position, and the third position up and down to respectively pick up a first electrode sheet, a separator, and a second electrode sheet and moves the suction unit that has arrived at the fourth position up and down to stack a separator.

A second operation moves the suction unit that has arrived at the fourth position up and down to stack a second electrode sheet.

A third operation moves the suction unit that has arrived at the second position up and down to pick up a separator and moves the suction unit that has arrived at the fourth position up and down to stack a separator.

A fourth operation moves the suction unit that has arrived at the fourth position up and down to stack a first electrode sheet.

With this stacking apparatus, a separator, a first electrode sheet, and a second electrode sheet are conveyed by different suction units and a second electrode sheet, a separator, a first electrode sheet, and another separator are stacked in that order at the fourth position. Accordingly, it is possible to manufacture a layered stack using a separator with low air permeability. In addition, the pickup unit only needs to rotate in the first direction and does not need to reverse the direction. In the first operation and the third operation, by picking up a separator at the second position in addition to stacking a separator at the fourth position, it is possible to continuously repeat an operation of stacking the first electrode sheets and the second electrode sheets with separators in between. This means that it is possible to manufacture a layered stack at comparatively high speed using a stacking apparatus with a simple construction.

It is possible to dispose the first position, the second position, the third position, and the fourth position at a pitch of 90° and for the pickup unit to include the suction units in four directions. It is also possible to dispose the first position, the second position, the third position, and the fourth position at a pitch of 45° or narrower.

Another aspect of the present invention is a method including stacking first electrode sheets and second electrode sheets with sheet-like separators in between using a stacking apparatus. Such method may be a control method of a stacking apparatus, may be a method of manufacturing a layered stack, that is, an electrode assembly, or may be a method of manufacturing a cell including an electrode assembly, for example a secondary cell such as a lithium cell, or a cell, such as a fuel cell.

The stacking apparatus includes: a plurality of suction units that pass a first position where a first electrode sheet is supplied, a second position where a sheet-like separator is supplied, a third position where a second electrode sheet is supplied, and a fourth position where the first electrode sheet and the second electrode sheet are laminated with a separator in between, in order, the first to fourth positions being a plurality of positions that are disposed at equal intervals in a first direction around a circumference. Stacking in such method includes the following steps.
1. Moving (moving up and down) the suction units that have arrived at the first position, the second position, and the third position up and down to respectively pick up a first electrode sheet, a separator, and a second electrode sheet and moving (moving up and down) the suction unit that has arrived at the fourth position up and down to stack a separator.
2. Rotating the plurality of suction units in the first direction and moving (moving up and down) the suction unit that has arrived at the fourth position up and down to stack the second electrode sheet.
3. Rotating the plurality of suction units in the first direction, moving (moving up and down) the suction unit that has arrived at the second position up and down to pick up a separator, and moving (moving up and down) the suction unit that has arrived at the fourth position up and down to stack a separator; and
4. Rotating the plurality of suction units in the first direction and moving (moving up and down) the suction unit that has arrived at the fourth position up and down to stack a first electrode sheet.

It is desirable for the driving unit to include: a first driving unit that rotationally drives the pickup unit; a second driving unit that moves the pickup unit up and down; and a third driving unit that moves the respective suction units up and down. It is also desirable for the stacking apparatus to further include a control unit that causes the third operation unit to move the respective suction units up and down in the first operation, the second operation, the third operation, and the fourth operation in synchronization with causing the second operation unit to move the pickup unit up and down.

It is also desirable for the first to fourth steps described above in the method to respectively include moving simultaneously up and down the plurality of suction units via a pickup unit and moving separately up and down the suction units that are picking up or stacking in synchronization with such simultaneous up and down movement.

In such operations and processes, by simultaneously driving the second driving unit and the third driving unit when lowering the suction units to pick up or to stack a separator, a first electrode sheet, and a second electrode sheet, it is possible to reduce the time taken to move the suction units up and down. The suction units that do not need to be lowered to pick up or stack are controlled by not driving the third driving unit even when the pickup unit is lowered by the second driving unit.

The stacking apparatus may include a first rotating stage that supplies a first electrode sheet to the first position, a second rotating stage that supplies a separator to the second position, a third rotating stage that supplies a second electrode sheet to the third position, and a fourth rotating stage that discharges a layered stack from the fourth position. By using the rotating stages, it is possible to smoothly supply the electrode sheets and the separator to the respective positions, and it is possible to adjust the alignment of members that need alignment on the rotating stages.

The method according to the present invention includes a control method of a stacking apparatus. This control method can be provided as a computer including computer resources, such as a CPU and memory, or as a program (program product) that causes a computer to operate and has been recorded on an appropriate medium (a CD-ROM or the like).

### BRIEF DESCRIPTION OF THE DRAWINGS

[FIG. 1] FIG. 1 is a plan view showing the overall arrangement of a stacking apparatus.
[FIG. 2] FIG. 2 is a diagram showing a stacking procedure.
[FIG. 3] FIG. 3 is diagrams showing a state where a pickup unit has been raised (FIG. 3(a)) and a state where the pickup unit has been lowered (FIG. 3(b)).
[FIG. 4] FIG. 4 is a flowchart showing the processing of a stacking apparatus.

### DETAIL DESCRIPTION

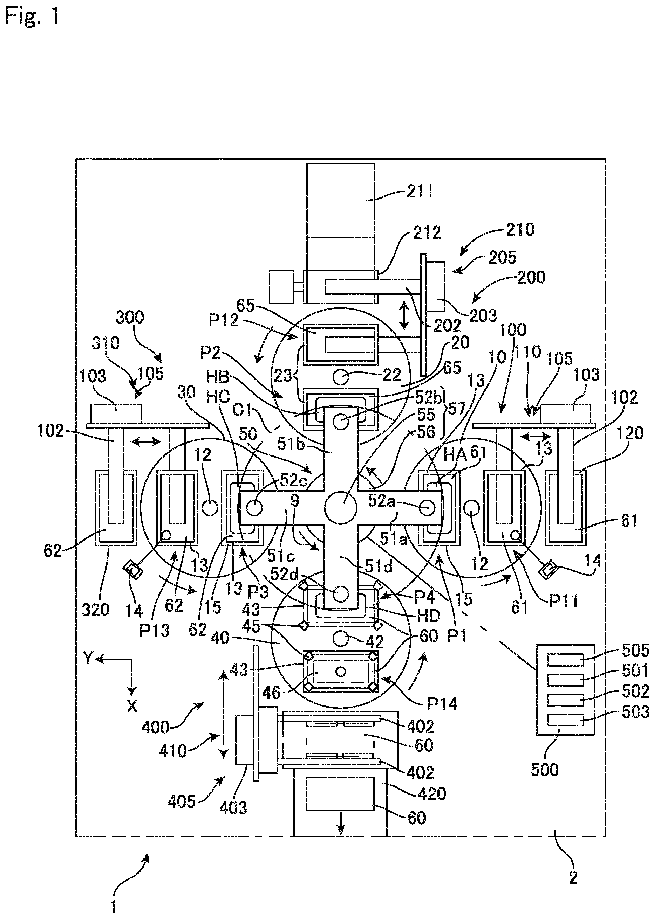

FIG. 1 shows, by way of a plan view, an arrangement of one example of a stacking apparatus that manufactures an electrode structure (layered stack) for use in a lithium ion cell. The stacking apparatus 1 laminates positive electrode sheets 61, negative electrode sheets 62, and sheet-like separators 65 to manufacture a layered stack (laminated structure, electrode assembly, cell) 60.

The stacking apparatus 1 includes a chassis 2 and a pickup unit (handler, index handler) 50 disposed in substantially the center of the chassis 2. The pickup unit 50 includes suction units (vacuum chucking heads, suction pads) HA, HB, HC, and HD disposed in four directions at a 90° pitch, with such suction units HA to HD respectively picking up one of a positive electrode sheet 61, a separator 65, and a negative electrode sheet 62 with predetermined timing while passing a first position P1, a second position P2, a third position P3, and a fourth position P4 in that order.

The first position P1, the second position P2, the third position P3, and the fourth position P4 are disposed at equal intervals, which is a 90° pitch in the present embodiment, along a virtual circumference C1 shown by a dot-dash line, and the pickup unit 50 rotates so that the plurality of suction units (vacuum chucking units) HA to HD pass the first to fourth positions P1 to P4 in order in the counter-clockwise direction.

The stacking apparatus 1 further includes a first supplying unit 100 that supplies a first electrode sheet 61 (positive electrode sheet, positive electrode plate) to the first position P1 of the chassis 2, a second supplying unit 200 that supplies a sheet-like separator 65 (separator) to the second position P2, a third supplying unit 300 that supplies a second electrode sheet 62 (negative electrode sheet, negative electrode plate) to the third position P3, and a discharging unit 400 that takes out a layered stack 60, in which positive electrode sheets 61, separators 65, and negative electrode sheets 62 have been stacked, from the fourth position P4. The first supplying unit 100, the second supplying unit 200, the third supplying unit 300, and the discharging unit 400 are disposed at a pitch of 90° in order in the counter-clockwise direction.

The first supplying unit 100 includes a first rotating stage 10 and a positive electrode sheet supplying unit 110 that supplies a positive electrode sheet 61 to the first rotating stage 10. The first rotating stage 10 rotates in units of 180° (with a pitch of 180°) so as to move between a receiving position P11 and the first position P1. The first rotating stage 10 conveys the positive electrode sheet 61 supplied to the receiving position P11 from the positive electrode sheet supplying unit 110 to the first position P1. The first rotating stage 10 includes two pallets 13 disposed at positions with rotational symmetry of order 2 (positions at 180°), a driving unit 12 that rotates the first rotating stage 10 in the counter-clockwise direction, a camera 14 that confirms the posture (orientation) of the positive electrode sheet 61 supplied to the pallet 13 at the receiving position P11, and an XYθ table 15 that moves the pallet 13 so as to adjust the alignment of the positive electrode sheet 61 at the first position P1. The direction of rotation of the first rotating stage 10 may be the clockwise direction. This also applies to the respective rotating stages described below.

The positive electrode sheet supplying unit 110 includes a feeder 105 that removes one positive electrode sheet 61 at a time from a cartridge 120 in which a plurality of positive electrode sheets 61 are stored and supplies the positive electrode sheet 61 to the pallet 13 at the receiving position P11. One example of the feeder 105 includes an arm 102 that vacuum chucks and conveys a positive electrode sheet 61 and an actuator 103 that drives the arm 102.

The second supplying unit 200 includes a second rotating stage 20 and a separator supplying unit 210 that supplies a separator 65 to the second rotating stage 20. The second rotating stage 20 rotates in units of 180° to convey a separator 65 supplied to a receiving position P12 from the separator supplying unit 210 to the second position P2. The second rotating stage 20 includes two pallets 23 disposed at positions with rotational symmetry of order 2 (positions at 180°) and a driving apparatus 22 that rotates the second rotating stage 20 in the counter-clockwise direction.

The separator supplying unit 210 includes a roll-like separator 211, a cutter 212 that pulls out a predetermined length of the separator from the roll-like separator 211 and cuts the separator into sheets of a predetermined size, and a feeder 205 that supplies the cut separators 65 one at a time to the pallet 23 at the receiving position P12. One example of the feeder 205 includes an arm 202 that vacuum chucks and conveys a separator 65 and an actuator 203 that drives the arm 202.

The third supplying unit 300 includes a third rotating stage 30 and a negative electrode sheet supplying unit 310 that supplies a negative electrode sheet 62 to the third rotating stage 30. The third rotating stage 30 rotates by 180° to convey the negative electrode sheet 62 supplied to a receiving position P13 from a negative electrode sheet supplying unit 310 to the third position P3. The constructions of the third rotating stage 30 and the negative electrode sheet supplying unit 310 are respectively the same as the first rotating stage 10 and the positive electrode sheet supplying unit 110, aside from the object to be conveyed being the negative electrode sheets 62 from a cartridge 320 that stores a plurality of the negative electrode sheets 62. For this reason, the same numerals have been assigned and description of the constructions is omitted.

The discharging unit 400 includes a fourth rotating stage 40 and an unloader unit 410 that bundles the layered stack 60 from the fourth rotating stage 40 and stores the layered stacks 60 in a stocker. The fourth rotating stage 40 rotates by 180° to convey the layered stack 60 laminated at the fourth position P4 to the unloading position P14. The fourth rotating stage 40 includes two pallets 43 disposed at positions with rotational symmetry of order 2 (positions at 180°), a driving apparatus 42 that rotationally drives the fourth rotating stage 40, a clamp (stopper) 45 that temporarily holds the layered stack 60 (the positive electrode sheet 61, the negative electrode sheet 62, and the separator 65) stacked on the respective pallets 43, and a cylinder 46 that lifts up the layered stack 60 at the unloading position P14 and hands over the layered stack 60 to the unloader unit 410. One example of the clamp 45 includes hooks that press the four corners of the layered stack 60 or positions near the four corners from above.

The unloader unit 410 includes a unit 420 that packages the unloaded layered stack 60 and a feeder 405 that conveys the layered stack 60 from the unloading position P14 to the packaging unit 420. One example of the feeder 405 includes an arm 402 that supports the layered stack 60 lifted by the cylinder 46 from below and conveys the layered stack 60 and an actuator 403 that drives the arm 402. The packaging unit 420 packages the layered stack 60 by wrapping an appropriate material, for example, the same material as the separator, around the layered stack 60 that is a laminated structure and stores the layered stack 60 in a vessel, such as a cartridge, used for conveying.

The pickup unit 50 that supports the suction heads HA to HD includes four arms 51a, 51b, 51c, and 51 d that extend in four directions at a pitch of 90°. The suction heads HA, HB, HC, and HD are attached to the respective front end portions of the arms 51 a to 51d and rotate in the counter-clockwise direction together with the pickup unit 50 (that is, the arms 51a to 51d). The suction heads HA, HB, HC, and HD are vacuum chucking heads that constructed so that the interiors of the heads are placed under negative pressure by a vacuum pump, not shown, and are capable of holding sheet-like members using suction and releasing (discharging) the sheet-like members that were held using suction (held by vacuum chucking) by placing the interiors of the heads at atmospheric pressure or by increasing the pressure.

The stacking apparatus 1 further includes a driving unit 57 that rotates the suction heads HA, HB, HC, and HD in the counter-clockwise direction and also moves the heads up and down. The driving unit 57 includes a first driving unit 55 that rotationally drives the pickup unit 50 in which the arms 51a to 51d are integrated in the counter-clockwise direction, a second driving unit 56 that drives the pickup unit 50 as a whole up and down by a height W1, and separate cylinders (third driving units) 52a, 52b, 52c, and 52d that support the respective suction heads HA, HB, HC, and HD so that the heads move up and down by a height W2 with respect to the respective arms 51a to 51d. One example of the first driving unit 55 is an actuator for rotational driving, such as a motor. One example of the second driving unit 56 is an actuator for linear driving, such as an air cylinder.

The stacking apparatus 1 further includes a control unit 500 that controls the respective suction heads HA to HD of the pickup unit 50, the separate cylinders 52a to 52d, the unit driving apparatus 55, the unit cylinder 56, and the like.

The control unit 500 includes a first function (functional unit) 501 that rotates the pickup unit 50 in the counter-clockwise direction using the first driving unit 55 and temporarily stops the respective suction heads HA to HD at the respective positions of the first position P1 to the fourth position P4, a second function (functional unit) 502 that moves the pickup unit 50 up and down using the second driving unit 56, a third function (functional unit) 503 that moves the respective suction units HA to HD independently up and down using the separate cylinders 52a to 52d, and an operation control unit 505 that repeatedly carries out the operations described below with the functions above using the driving unit 57.

First operation (First action): suction units that have arrived at the first position P1, the second position P2, and the third position P3, for example, the suction units HA to HC, are moved up and down to respectively pick up a positive electrode sheet 61, a separator 65, and a negative electrode sheet 62 and the suction unit HD that has arrived at the fourth position P4 is moved up and down to stack a separator 65.

Second operation (Second action): the suction unit HC that has arrived at the fourth position P4 is moved up and down so as to stack the negative electrode sheet 62.

Third operation (Third action): the suction unit HD that has arrived at the second position P2 is moved up and down so as to pick up a separator 65 and the suction unit HB that has arrived at the fourth position P4 is moved up and down to stack a separator 65.

Fourth operation (Fourth action): the suction unit HA that has arrived at the fourth position P4 is moved up and down so as to stack a first electrode sheet.

The second function 502 controls the second driving unit 56 so that the suction heads HA to HD are placed at the lowest level when the suction heads HA to HD have arrived at one of the first position P1 to the fourth position P4. The second function 502 may move the pickup unit 50 up and down even while the pickup unit 50 is being rotated by the first driving unit 55 or may move the pickup unit 50 up and down when the pickup unit 50 has temporarily stopped at the respective positions.

The third function 503 separately moves the suction heads HA to HD that pick up, or stack when at the fourth position P4, up and down in the respective operations described above. The third function 503 may separately move the suction heads HA to HD up and down even while the pickup unit 50 is being rotated by the first driving unit 55 or may separately move the suction heads HA to HD up and down when the pickup unit 50 has temporarily stopped at the respective positions. By operating in collaboration with or in synchronization with the second function 502 to separately move the suction heads HA to HD up and down, the third function 503 can reduce the time needed to move the suction heads HA to HD up and down.

One example of the positive electrode sheets 61 is a positive electrode sheet (positive electrode plate, positive electrode layer) 61 that constructs a layered stack 60 used for a lithium ion cell, and is produced by applying a positive electrode active material to both surfaces of metal foil, such as aluminum foil, drying, rolling, and then cutting to an appropriate size. One example of the negative electrode sheets 62 is a negative electrode sheet produced by applying a negative electrode active material to both surfaces of metal foil, such as nickel foil or copper foil, drying, rolling, and then cutting to an appropriate size. The positive electrode sheet 61 or the negative electrode sheet 62 are not limited to use in a lithium cell, and may be another type of cell or an electrode structure for a fuel cell.

One example of the separators 65 is a separator that prevents short circuits between the positive electrode sheet 61 and the negative electrode sheet 62 described above and may have a function for holding an electrolyte. As one example, the separator 65 is a microporous film composed of polyolefin such as polyethylene (PE) and polypropylene (PP), and also has a function whereby when an overcurrent flows, the pores in the film close up due to the resultant heat and thereby shut off the current. The separator 65 is not limited to only a single film of polyolefin or the like, and it is possible to use a three-layer structure where a polypropylene layer is sandwiched by polyethylene layers or a structure where polyolefin microporous film, organic nonwoven fabric, and the like are laminated.

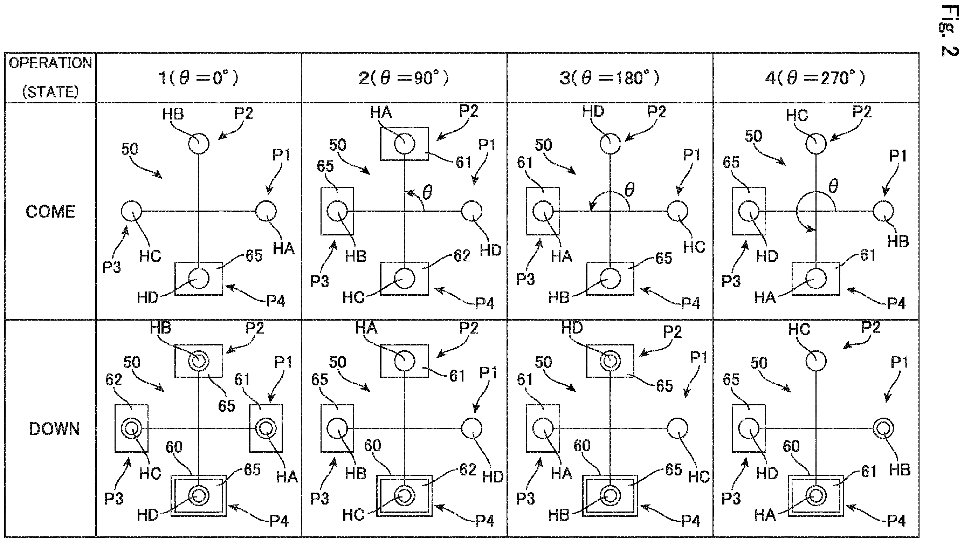

FIG. 2 shows in further detail the operation of the stacking apparatus 1 when manufacturing the layered stack 60 at the fourth position P4 while rotating the pickup unit 50 in the counter-clockwise direction. FIG. 2 will be used to describe the procedure where the layered stack 60 is manufactured by the stacking apparatus 1 while referring to the angle θ in the counter-clockwise direction between the first position P1 and the suction head HA. The "COME" row at the top in FIG. 2 shows a state when the respective suction heads HA to HD arrive, and the "DOWN" row at the bottom in FIG. 2 shows an operation carried out by the respective suction heads HA to HD after arriving.

### First Operation (State S1)

In the state S1 where the angle θ is zero, that is, where the suction head HA is at the first position P1, all of the suction heads HA to HD are lowered by the second driving unit (unit cylinder) 56 and the separate cylinders 52a to 52d (DOWN of the first operation, note that suction heads that have been lowered are shown by double circles in the drawing), and suction and releasing are carried out. At the first position P1, the suction head HA vacuum chucks the positive electrode sheet 61, at the second position P2, the suction head HB vacuum chucks the separator 65, and at the third position P3, the suction head HC vacuum chucks the negative electrode sheet 62. At the fourth position P4, the suction head HD releases the separator 65 that was being vacuum chucked so that another separator 65 is stacked upon the electrodes and the separators 65 that have already been stacked, thereby manufacturing the layered stack 60.

### Second Operation (State S2)

After the suction heads HA to HD have been raised in the first operation and the pickup unit 50 has been rotated by 90° in the counter-clockwise direction by the first driving unit 55, the suction head HA arrives at the second position P2 from the first position P1 (state S2, "COME" of the second operation). The angle θ becomes 90°. In the second operation, only the suction head HC that has arrived at the fourth position P4 is lowered by the separate cylinder 52c ("DOWN" of the second operation). The negative electrode sheet (second electrode sheet) 62 that was vacuum chucked by the suction head HC is released and is stacked on the separator 65.

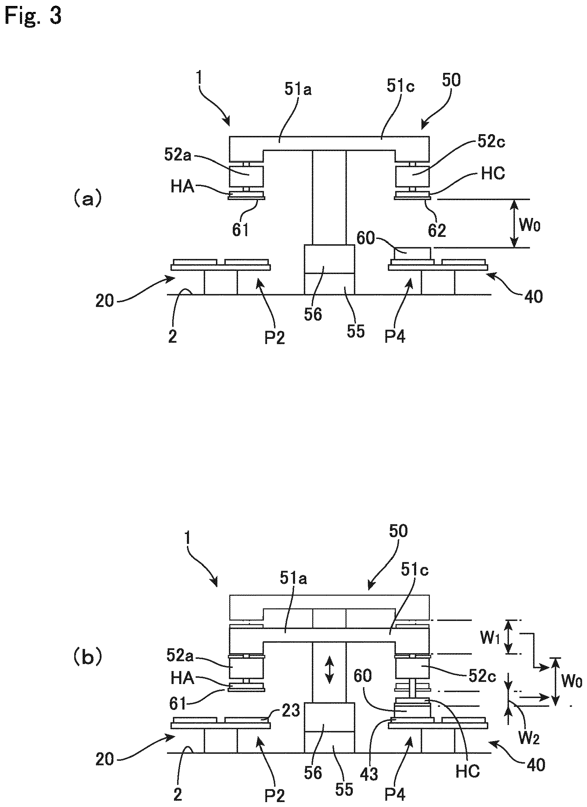

FIG. 3 shows how the pickup unit 50 is moved up and down (raised and lowered). FIG. 3(a) and (b) separately show how the pickup unit 50 carries out the second operation. In FIG. 3(a), the arms 51a and 51c of the pickup unit 50 rotate in the raised state. Focusing on the suction head HC, a distance W0 is maintained from the layered stack 60 that has been laminated at the fourth position P4, thereby making it possible to prevent interference with the layered stack 60.

FIG. 3(b) shows a state where the suction heads HA and HC have been lowered. The suction heads HA and HC are lowered by the distance W1 together with the pickup unit 50 by the second driving unit 56. At the same time, only the suction head HC is lowered by a further distance W2 by the separate cylinder 52c. Accordingly, the suction head HC is lowered by the distance W0 that is the sum of the distance W1 and the distance W2. By separately lowering the suction head HC using the separate cylinder 52c at the same time as the entire pickup unit 50 is being lowered by the second driving unit 56, it is possible to set the suction head HC at a predetermined height in a short time. Also, by not operating the other separate cylinder 52a, it is possible to prevent the suction head HA from being lowered in this case to the pallet 23 of the second position P2, even when the entire pickup unit 50 is lowered.

The third function 503 may include a function that controls the raising/lowering distance W2 of the separate cylinders 52a to 52d according to the thickness of the layered stack 60 stacked at the fourth position P4. It is possible, in a state where the raising/lowering distance W1 of the second driving unit 56 is kept constant, to control the distance by which the respective suction heads HA to HD are lowered in accordance with the height of the layered stack 60 stacked (manufactured) at the fourth position P4. The third function 503 may be equipped with a function that separately controls or adjusts the raising/lowering distance W2 of the separate cylinders 52a to 52d at the other positions P1 to P3 so that the respective suction heads HA to HD reach the pallets 13 or 23. It is also possible to use an arrangement where the individual suction heads HA to HD detect the lowering distance that is necessary for or suited to vacuum chucking using an optical sensor or the like and carry out automatic adjustment. A raising/lowering apparatus may be attached to the pallet 43 of the fourth position P4 and the height relative to the top of the layered stack 60 may be controlled on the pallet 43 side. It is possible to keep the raising/lowering distance W2 of the separate cylinders 52a to 52d constant.

### Third Operation (State S3)

Returning to FIG. 2, after the suction head HC has been raised in the second operation and the pickup unit 50 has been rotated further by 90° in the counter-clockwise direction by the first driving unit 55, the suction head HA arrives at the third position P3 from the second position P2 (the state S3, "COME" of the third operation). The angle θ that the suction head HA has moved from the first position P1 becomes 180°. In the third operation, the suction head HB that has arrived at the fourth position P4 and the suction head HD that has arrived at the second position P2 are lowered by the separate cylinders 52b and 52d ("DOWN" of the third operation). The separator 65 that was vacuum chucked by the suction head HB is released and is stacked on an electrode of the layered stack 60. At the same time, the suction head HD vacuum chucks a separator 65 at the second position P2.

### Fourth Operation (State S4)

After the suction heads HB and HD have been raised in the third operation and the pickup unit 50 has been rotated further by 90° in the counter-clockwise direction by the first driving unit 55X, the suction head HA arrives at the fourth position P4 from the third position P3 (the state S4, "COME" of the fourth operation). The angle θ that the suction head HA has moved from the first position P1 becomes 270°. In the fourth operation, only the suction head HA that has arrived at the fourth position P4 is lowered by the separate cylinder 52a ("DOWN" of the fourth operation). The positive electrode sheet 61 that was vacuum chucked by the suction head HA is released and the positive electrode sheet 61 is stacked on the separator 65.

After the suction head HA has been raised in the fourth operation and the pickup unit 50 has been rotated further by 90° in the counter-clockwise direction by the first driving unit 55, the processing returns to the first operation described above. In the first operation, the separator 65 that was picked up in the third operation is stacked on the positive electrode sheet 61 at the fourth position P4. In this way, rotation of the pickup unit 50 in the counter-clockwise direction continues and by repeating from the first operation to the fourth operation a predetermined number of times, a negative electrode sheet 62, a separator 65, a positive electrode sheet 61, and a separator 65 are laminated a predetermined number of times at the fourth position P4 and the layered stack (electrode assembly) 60 is manufactured.

Note that in cases where, when manufacturing of the layered stack 60 starts and the manufacturing ends, a separator 65 is stacked before the electrode sheets, a separator 65 is stacked last, or a negative electrode sheet 62 is staked last, it is possible to add a step of suction a separator 65 from the second position P2 and conveying to the fourth position P4 or to add a step of suction a negative electrode sheet 62 from the third position P3 and conveying to the fourth position P4.

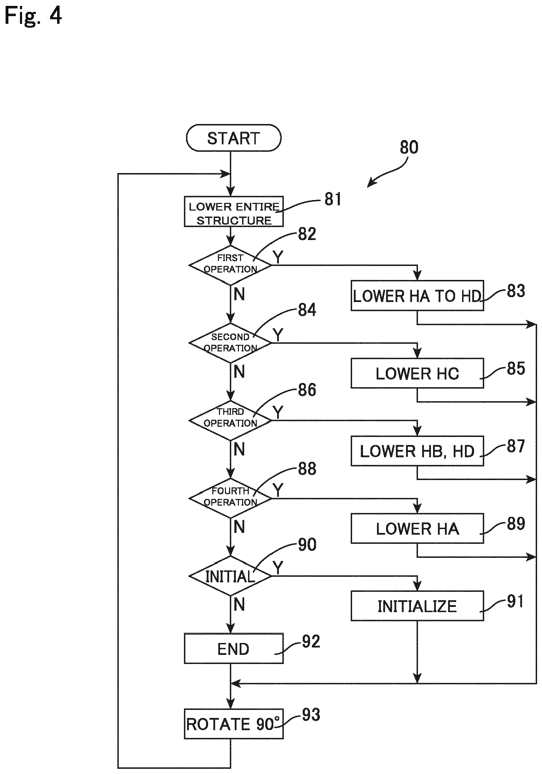

FIG. 4 shows a method including a process 80 that stacks positive electrode sheets 61 and negative electrode sheets 62 with sheet-like separators 65 in between using the stacking apparatus 1. This method may be a control method of the stacking apparatus 1 or may be a method of manufacturing the layered stack 60 (electrode assembly). By enclosing the layered stack 60 in a case together with electrolyte, it is possible to manufacture and provide a lithium cell, for example.

In step 81, after the pickup unit 50 has been rotated by a predetermined angle, in the present embodiment 90°, by the first function 501, the second function 502 lowers the pickup unit 50 using the second driving unit 56. In step 82, if the operation control unit 505 has determined that the positions of the suction heads HA to HD are the positions of the first operation, in step 83, the third function 503 lowers the suction heads HA to HD using all of the separate cylinders 52a to 52d. The three suction heads (suction units) HA, HB, and HC respectively pick up a positive electrode sheet 61, a separator 65, and a negative electrode sheet 62 at the first position P1, the second position P2, and the third position P3. The suction head HD releases the separator 65 at the fourth position P4 and the stacking (manufacturing) of the layered stack 60 proceeds.

In step 83, a positive electrode sheet 61, a separator 65, and a negative electrode sheet 62 are picked up and consumed at the first position P1, the second position P2, and the third position P3. Accordingly, the first supplying unit 100, the second supplying unit 200, and the third supplying unit 300 rotate the first rotating stage 10, the second rotating stage 20, and the third rotating stage 30 by a half turn at the next timing following execution of the first operation. By doing so, the positive electrode sheet 61, the separator 65, and the negative electrode sheet 62 are placed in a state where such members can be picked up at the first position P1, the second position P2, and the third position P3.

In step 84, if the operation control unit 505 determines that the positions of the suction heads HA to HD are the positions of the second operation, in step 85, the third function 503 lowers the suction head HC using the separate cylinder 52c and stacks the negative electrode sheet 62 that is held by the suction head HC at the fourth position P4.

In step 86, if the operation control unit 505 determines that the positions of the suction heads HA to HD are the positions of the third operation, in step 87, the third function 503 lowers the suction heads HB and HD using the separate cylinders 52b and 52d, the separator 65 that is being held by the suction head HB is stacked at the fourth position P4, and the suction head HD picks up a separator 65 at the second position P2.

In step 87, a separator 65 is consumed at the second position P2. Accordingly, at the next timing following execution of the third operation, the second supplying unit 200 rotates the second rotating stage 20 by a half turn and provides a separator 65 at the second position P2 in a state where the separator 65 can be picked up.

In step 88, if the operation control unit 505 determines that the positions of the suction heads HA to HD are the positions of the fourth operation, in step 89 the third function 503 lowers the suction head HA using the separate cylinder 52a and stacks the positive electrode sheet 61 that is being held by the suction head HA at the fourth position P4.

In step 90, if the operation control unit 505 determines that the state of the layered stack 60 is a state where the stacking of a layered stack 60 is to newly start at the fourth position P4, in step 91, the third function 503 drives appropriate separate cylinders out of the separate cylinders 52a to 50d. As one example, if a separator 65 is to be stacked at the fourth position P4 first, in step 91, a separator 65 is vacuum chucked by one of the suction heads and the separator 65 is placed at the fourth position P4.

In step 92, once it is determined that the positive electrode sheets 61, the separators 65, and the negative electrode sheets 62 have been stacked at the fourth position P4 a predetermined number of times (predetermined number of sheets) to manufacture the layered stack 60, a final process is carried out. As one example, if a separator 65 is stacked last at the fourth position P4, in step 92, one of the suction heads is used to laminate a separator 65 at the fourth position P4. The discharging unit 400 rotates the fourth rotating stage 40 by a half turn at the next timing and moves the layered stack 60 at the fourth position P4 to the unloading position P 14. The next pallet is provided at the fourth position P4 and manufacturing of the next layered stack 60 is started.

When any of such processes has been carried out and the lowered suction heads HA to HD have been raised to their original height, in step 93, the first function 501 rotates the pickup unit 50 by 90° in the counter-clockwise direction using the first driving unit 55. By repeating such processes, layered stacks 60 can be successively manufactured at the fourth position P4. Whenever a layered stack 60 has been manufactured at the fourth position P4, the discharging unit 400 discharges such layered stack 60 so that the next layered stack 60 is manufactured at the fourth position P4.

Note that although the first position P1, the second position P2, the third position P3, and the fourth position P4 are provided at a 90° pitch in the stacking apparatus 1 described above, it is also possible to provide such positions at a 45° pitch, to provide the positions at a 30° pitch, or to provide the positions at even narrower angles, which makes it possible to manufacture a plurality of layered stacks 60 simultaneously.

Also, in the stacking apparatus 1 described above, although the pickup unit 50 rotates in the counter-clockwise direction, the pickup unit 50 may be rotated in the clockwise direction and the first position P1 to the fourth position P4 may be laid out in the clockwise direction. The direction of rotation of the rotating stages may also be reversed. Also, although an example where an electrode structure (layered stack) 60 for use in a lithium ion cell is manufactured by the stacking apparatus 1 has been described above, the stacking apparatus 1 is not limited to a lithium ion cell and is favorable for manufacturing any cell including a stacked or laminated electrode structure.

## Claims

1. A stacking apparatus (1) comprising:
a pickup unit (50) including a plurality of suction units (HA,HB,HC,HD) that pass a first position (P1), a second position (P2), a third position (P3), and a fourth position (P4), which are disposed at equal intervals in a first direction around a circumference, in order:
a first supplying unit (100) that supplies a first electrode sheet (61) to the first position (P1);
a second supplying unit (200) that supplies a sheet-like separator (65) to the second position (P2);
a third supplying unit (300) that supplies a second electrode sheet (62) to the third position (P3);
a discharging unit (400) that discharges, from the fourth position (P4), a layered stack (60) in which the first electrode sheet (61) and the second electrode sheet (62) have been alternately stacked with the separator (65) in between; and
a driving unit (12) that moves the respective suction units (HA,HB,HC,HD) of the plurality of suction units (HA,HB,HC,HD) in order to the first position (P1), the second position (P2), the third position (P3), and the fourth position (P4) and also causes up-down movement of the respective suction units (HA,HB,HC,HD),
**characterized in that**
the up-down movement includes:
a first operation that moves the suction units (HA,HB,HC,HD) that have arrived at the first position (P1), the second position (P2), and the third position (P3) up and down to respectively pick up a first electrode sheet, a separator (65), and a second electrode sheet and moves the suction unit (HA,HB,HC,HD) that has arrived at the fourth position (P4) up and down to stack a separator (65);
a second operation that moves the suction unit (HA,HB,HC,HD) that has arrived at the fourth position (P4) up and down to stack a second electrode sheet;
a third operation that moves the suction unit (HA,HB,HC,HD) that has arrived at the second position (P2) up and down to pick up a separator (65) and moves suction unit (HA,HB,HC,HD) that has arrived at the fourth position (P4) up and down to stack a separator; and
a fourth operation that moves the suction unit (HA,HB,HC,HD) that has arrived at the fourth position (P4) up and down to stack a first electrode sheet.

2. The stacking apparatus (1) according to claim 1,
wherein the driving unit (12) includes:
a first driving unit (55) that rotationally drives the pickup unit (50);
a second driving unit (56) that moves the pickup unit (50) up and down; and
a third driving unit (52a,52b,52c,52d) that moves the respective suction units (HA,HB,HC,HD) up and down.

3. The stacking apparatus (1) according to claim 2,
further comprising a control unit (500,505) that causes the third operation unit to move the respective suction units (HA,HB,HC,HD) up and down in the first operation, the second operation, the third operation, and the fourth operation in synchronization with causing the second operation unit to move the pickup unit (50) up and down.

4. The stacking apparatus (1) according to any of claims 1 to 3,
wherein the first supplying unit (100) includes a first rotating stage (10) that supplies a first electrode sheet (61) to the first position (P1),
the second supplying unit (200) includes a second rotating stage (20) that supplies a separator (65) to the second position (P2),
the third supplying unit (300) includes a third rotating stage (30) that supplies a second electrode sheet (62) to the third position (P3), and
the discharging unit (400) includes a fourth rotating stage (40) that discharges a layered stack (60) from the fourth position (P4).

5. The stacking apparatus (1) according to any of claims 1 to 4,
wherein the first position (P1), the second position (P2), the third position (P3), and the fourth position (P4) are disposed at a pitch of 90° and the pickup unit (50) includes the suction units (HA,HB,HC,HD) in four directions.

6. A method comprising stacking first electrode sheets and second electrode sheets with sheet-like separators (65) in between using a stacking apparatus (1),
wherein the stacking apparatus (1) includes:
a plurality of suction units (HA,HB,HC,HD) that pass a first position (P1) where a first electrode sheet (61) is supplied, a second position (P2) where a sheet-like separator (65) is supplied, a third position (P3) where a second electrode sheet (62) is supplied, and a fourth position (P4) where the first electrode sheet (61) and the second electrode sheet (62) are stacked with a separator (65) in between, in order, the first to fourth positions (P4) being a plurality of positions that are disposed at equal intervals in a first direction around a circumference,
**characterized in that**
the stacking includes:
moving up and down the suction units (HA,HB,HC,HD) that have arrived at the first position (P1), the second position (P2), and the third position (P3) to respectively pick up a first electrode sheet (61), a separator (65), and a second electrode sheet (62) and moving up and down the suction unit (HA,HB,HC,HD) that has arrived at the fourth position (P4) to stack a separator (65);
rotating the plurality of suction units (HA,HB,HC,HD) in the first direction and moving up and down the suction unit (HA,HB,HC,HD) that has arrived at the fourth position (P4) to stack a second electrode sheet (62);
rotating the plurality of suction units (HA,HB,HC,HD) in the first direction, moving up and down the suction unit (HA,HB,HC,HD) that has arrived at the second position (P2) to pick up a separator (65), and moving up and down the suction unit (HA,HB,HC,HD) that has arrived at the fourth position (P4) to stack a separator (65); and
rotating the plurality of suction units (HA,HB,HC,HD) in the first direction and moving up and down the suction unit (HA,HB,HC,HD) that has arrived at the fourth position (P4) to stack a first electrode sheet (61).

7. The method according to claim 6,
wherein the moving up and down includes:
simultaneous moving up and down the plurality of suction units (HA,HB,HC,HD) via a pickup unit (50) that includes the plurality of suction units (HA,HB,HC,HD); and
separate moving up and down the suction units (HA,HB,HC,HD) that are picking up or stacking in synchronization with the simultaneous moving up and down.

## Patentansprüche

1. Eine Stapelvorrichtung (1) bestehend aus:
einer Aufnahmeeinheit (50), welche eine Vielzahl von Saugeinheiten (HA, HB, HC, HD) enthält, welche eine erste Position (P1), eine zweite Position (P2), eine dritte Position (P3) und eine vierte Position (P4) einnehmen, welche in einer ersten Umfangsrichtung in gleichen Intervallen angeordnet sind, in Reihenfolge:
einer ersten Zuführeinheit (100), welche eine erste Elektrodenplatte (61) der ersten Position (P1) zuführt;
eine zweite Zuführeinheit (200), welche einen plattenartigen Separator (65) der zweiten Position (P2) zuführt;
eine dritte Zuführeinheit (300), welche eine zweite Elektrodenplatte (62) der dritten Position (P3) zuführt;
eine Entnahmeeinheit (400), welche in der vierten Position (P4) einen Schichtstapel (60) entnimmt, in welchem die erste Elektrodenplatte (61) und die zweite Elektrodenplatte (62) abwechselnd mit dem Separator (65) dazwischen gestapelt ist; und
eine Antriebseinheit (12), welche die jeweiligen Saugeinheiten (HA,HB,HC,HD) aus der Vielzahl an Saugeinheiten (HA,HB,HC,HD) in Reihenfolge in die erste Position (P1), die zweite Position (P2), die dritte Position (P3) und die vierte Position (P4) bewegt und ebenso eine Auf- und Abbewegung der jeweiligen Saugeinheiten (HA,HB,HC,HD) bewirkt,
**dadurch charakterisiert,**
daß die Auf- und Abbewegung beinhaltet:
eine erste Betriebsweise, in der die Saugeinheiten (HA,HB,HC,HD), die an der ersten Position (P1), der zweiten Position (P2) und der dritten Position (P3) angelangt sind, auf und ab bewegt werden, um jeweils eine erste Elektrodenplatte (61), einen Separator (65) und eine zweite Elektrodenplatte (62) aufzunehmen und die Saugeinheit (HA,HB,HC,HD), welche die vierte Position (P4) erreicht hat, auf und ab bewegt, um einen Separator (65) zu stapeln;
eine zweite Betriebsweise, in der die Saugeinheit (HA,HB,HC,HD), welche die vierte Position (P4) erreicht hat, auf und ab bewegt wird, um eine zweite Elektrodenplatte zu stapeln;
eine dritte Betriebsweise, in der die Saugeinheit (HA,HB,HC,HD), welche die zweite Position (P2) erreicht hat, auf und ab bewegt wird, um einen Separator (65) aufzunehmen und die Saugeinheit (HA,HB,HC,HD), welche die vierte Position (P4) erreicht hat, auf und ab bewegt wird, um einen Separator zu stapeln; und
eine vierte Betriebsweise, in der die Saugeinheit (HA,HB,HC,HD), welche die vierte Position (P4) erreicht hat, auf und ab bewegt wird, um eine erste Elektrodenplatte zu stapeln.

2. Die Stapelvorrichtung (1) nach Anspruch 1,
wobei die Antriebseinheit (12) beinhaltet:
eine erste Antriebseinheit (55), die die Aufnahmeeinheit (50) drehend antreibt;
eine zweite Antriebseinheit (56), die die Aufnahmeeinheit (50) auf und ab bewegt; und eine dritte Antriebseinheit (52a,52b,52c,52d), welche die jeweiligen Saugeinheiten (HA,HB,HC,HD) auf und ab bewegt.

3. Die Stapelvorrichtung (1) nach Anspruch 2,
weiterhin aufweisend eine Steuereinheit (500,505), welche die dritte Betriebseinheit dazu veranlaßt, in der ersten Betriebsweise, der zweiten Betriebsweise, der dritten Betriebsweise und der vierten Betriebsweise, die jeweiligen Saugeinheiten (HA,HB,HC,HD) auf und ab zu bewegen, synchron zu einem Auf- und Abbewegen der Aufnahmeeinheit (50) durch die zweite Betriebseinheit.

4. Die Stapelvorrichtung (1) nach einem der Ansprüche 1 bis 3,
wobei die erste Zuführeinheit (100) eine erste Drehbühne (10) beinhaltet, welche eine erste Elektrodenplatte (61) der ersten Position (P1) zuführt,
die zweite Zuführeinheit (200) eine zweite Drehbühne (20) beinhaltet, welche einen Separator (65) der zweiten Position (P2) zuführt,
die dritte Zuführeinheit (33) eine dritte Drehbühne (30) beinhaltet, welche eine zweite Elektrodenplatte (62) der dritten Position (P3) zuführt, und
die Entnahmeeinheit (400) eine vierte Drehbühne (40) beinhaltet, welche einen Schichtstapel (60) aus der vierten Position (P4) entnimmt.

5. Die Stapelvorrichtung (1) nach einem der Ansprüche 1 bis 4,
wobei die erste Position (P1), die zweite Position (P2), die dritte Position (P3) und die vierte Position (P4) in einer 90° Neigung angeordnet werden und die Aufnahmeeinheit (50) die Saugeinheiten (HA,HB,HC,HD) in vier Richtungen beinhaltet.

6. Verfahren bestehend aus dem Stapeln erster Elektrodenplatten und zweiter Elektrodenplatten mit dazwischenliegenden plattenartigen Separatoren (65) unter Verwenden der Stapelvorrichtung (1),
wobei die Stapelvorrichtung (1) beinhaltet:
eine Vielzahl an Saugeinheiten (HA,HB,HC,HD) die eine erste Position (P1) durchlaufen, in der eine erste Elektrodenplatte (61) zugeführt wird, eine zweite Position, (P2) in der ein plattenartiger Separator (65) zugeführt wird, eine dritte Position (P3), in der eine zweite Elektrodenplatte (62) zugeführt wird und eine vierte Position (P4), in der die erste Elektrodenplatte (61) und die zweite Elektrodenplatte (62) mit einem Separator (65) dazwischen gestapelt werden, um der Reihe nach, von der ersten zur vierten Position (P4), welche eine Vielzahl an Positionen darstellen, in einer ersten Umfangsrichtung in gleichen Intervallen beabstandet sind,
**dadurch gekennzeichnet,**
**daß** das Stapeln beinhaltet:
Auf- und Abbewegen der Saugeinheiten (HA,HB,HC,HD) welche die erste Position (P1), die zweite Position (P2) und die dritte Position (P3) erreicht haben, um jeweils eine erste Elektrodenplatte (61), einen Separator (65) und eine zweite Elektrodenplatte (62) aufzunehmen, und Auf- und Abbewegen der Saugeinheit (HA,HB,HC,HD), welche die vierte Position (P4) erreicht hat, um einen Separator (65) zu stapeln;
Drehen der Vielzahl an Saugeinheiten (HA,HB,HC,HD) in der ersten Richtung, Auf- und Abbewegen der Saugeinheiten (HA,HB,HC,HD) welche die zweite Position (P2) erreicht haben um eine zweite Elektrodenplatte (62) zu stapeln;
Drehen der Vielzahl von Saugeinheiten (HA,HB,HC,HD) in der ersten Richtung und Auf- und Abbewegen der Saugeinheiten (HA,HB,HC,HD), welche die zweite Position (P2) erreicht haben, um einen Separator (65) aufzunehmen, und Auf-und Abbewegen der Saugeinheiten (HA,HB,HC,HD) die die vierte Position (P4) erreicht haben, um einen Separator (65) zu stapeln; und
Drehen der Vielzahl an Saugeinheiten (HA,HB,HC,HD) in der ersten Richtung und Auf- und Abbewegen der Saugeinheiten (HA,HB,HC,HD), welche die vierte Position (P4) erreicht haben, um eine erste Elektrodenplatte (61) zu stapeln.

7. Verfahren nach Anspruch 6,
wobei das Auf- und Abbewegen beinhaltet:
gleichzeitiges Auf- und Abbewegen der Vielzahl an Saugeinheiten (HA,HB,HC,HD) über eine Aufnahmeeinheit (50), welche die Vielzahl an Saugeinheiten (HA,HB,HC,HD) enthält; und
separates Auf- und Abbewegen der Saugeinheiten (HA,HB,HC,HD) welche Aufnehmen oder Stapeln, und zwar synchron zu dem gleichzeitigen Auf- und Abbewegen.

## Revendications

1. Appareil d'empilage (1) comprenant :
une unité de saisie (50) comprenant une pluralité d'unités d'aspiration (HA, HB, HC, HD) qui passent une première position (P1), une deuxième position (P2), une troisième position (P3) et une quatrième position (P4), qui sont disposées à des intervalles égaux dans une première direction autour d'une circonférence, dans l'ordre :
une première unité d'alimentation (100) qui alimente une première feuille d'électrode (61) vers la première position (P1) ;
une deuxième unité d'alimentation (200) qui alimente un séparateur analogue à une feuille (65) vers la deuxième position (P2) ;
une troisième unité d'alimentation (300) qui alimente une deuxième feuille d'électrode (62) vers la troisième position (P3) ;
une unité de décharge (400) qui décharge, à partir de la quatrième position (P4), une pile stratifiée (60) dans laquelle la première feuille d'électrode (61) et la deuxième feuille d'électrode (62) ont été alternativement empilées avec le séparateur (65) entre celles-ci ; et
une unité d'entraînement (12) qui déplace les unités d'aspiration respectives (HA, HB, HC, HD) de la pluralité d'unités d'aspiration (HA, HB, HC, HD) dans l'ordre vers la première position (P1), la deuxième position P2), la troisième position (P3) et la quatrième position (P4), et entraîne également un mouvement vers le haut et vers le bas des unités d'aspiration respectives (HA, HB, HC, HD),
**caractérisé en ce que**
le mouvement vers le haut et vers le bas comprend :
une première opération qui déplace les unités d'aspiration (HA, HB, HC, HD) qui sont arrivées à la première position (P1), la deuxième position (P2) et la troisième position (P3) vers le haut et vers le bas respectivement pour saisir une première feuille d'électrode, un séparateur (65) et une deuxième feuille d'électrode, et déplace l'unité d'aspiration (HA, HB, HC, HD) qui est arrivée à la quatrième position (P4) vers le haut et vers le bas pour empiler un séparateur (65) ;
une deuxième opération qui déplace l'unité d'aspiration (HA, HB, HC, HD) qui est arrivée à la quatrième position (P4) vers le haut et vers le bas pour empiler une deuxième feuille d'électrode ;
une troisième opération qui déplace l'unité d'aspiration (HA, HB, HC, HD) qui est arrivée à la deuxième position (P2) vers le haut et vers le bas pour saisir un séparateur (65) et déplace l'unité d'aspiration (HA, HB, HC, HD) qui est arrivée à la quatrième position (P4) vers le haut et vers le bas pour empiler un séparateur ; et
une quatrième opération qui déplace l'unité d'aspiration (HA, HB, HC, HD) qui est arrivée à la quatrième position (P4) vers le haut et vers le bas pour empiler une première feuille d'électrode.

2. Appareil d'empilage (1) selon la revendication 1, dans lequel l'unité d'entraînement (12) comprend :
une première unité d'entraînement (55) qui entraîne en rotation l'unité de saisie (50) ;
une deuxième unité d'entraînement (56) qui déplace l'unité de saisie (50) vers le haut et vers le bas ; et
une troisième unité d'entraînement (52a, 52b, 52c, 52d) qui déplace les unités d'aspiration respectives (HA, HB, HC, HD) vers le haut et vers le bas.

3. Dispositif d'empilage (1) selon la revendication 2, comprenant en outre une unité de commande (500, 505) qui amène la troisième unité de fonctionnement à déplacer les unités d'aspiration respectives (HA, HB, HC, HD) vers le haut et vers le bas dans la première opération, la deuxième opération, la troisième opération, et la quatrième opération en synchronisation, en amenant la deuxième unité de fonctionnement à déplacer l'unité de saisie (50) vers le haut et vers le bas.

4. Appareil d'empilage (1) selon l'une quelconque des revendications 1 à 3,
dans lequel la première unité d'alimentation (100) comprend un premier étage rotatif (10) qui alimente une première feuille d'électrode (61) vers la première position (1),
la deuxième unité d'alimentation (200) comprend un deuxième étage rotatif (20) qui alimente un séparateur (65) vers la deuxième position (P2),
la troisième unité d'alimentation (300) comprend un troisième étage rotatif (30) qui alimente une deuxième feuille d'électrode (62) vers la troisième position (P3), et
l'unité de décharge (400) comprend un quatrième étage rotatif (40) qui décharge une pile stratifiée (60) depuis la quatrième position (P4).

5. Appareil d'empilage (1) selon l'une quelconque des revendications 1 à 4,
dans lequel la première position (P1), la deuxième position (P2), la troisième position (P3), et la quatrième position (P4) sont disposées à un pas de 90°, et l'unité de saisie (50) comprend les unités d'aspiration (HA, HB, HC, HD) dans quatre directions.

6. Procédé comprenant l'empilage de premières feuilles d'électrode et de deuxièmes feuilles d'électrode avec des séparateurs analogue à une feuille (65) entre celles-ci en utilisant un appareil d'empilage (1), l'appareil d'empilage (1) comprenant :
une pluralité d'unités d'aspiration (HA, HB, HC, HD) qui passent une première position (P1) dans laquelle une première feuille d'électrode (61) est alimentée, une deuxième position (P2) dans laquelle un séparateur analogue à une feuille (65) est alimenté, une troisième position (P3) dans laquelle une deuxième feuille d'électrode (62) est alimentée, et une quatrième position (P4) dans laquelle la première feuille d'électrode (61) et la deuxième feuille d'électrode (62) sont empilées avec un séparateur entre celles-ci, dans l'ordre, les première à quatrième positions (P4) étant une pluralité de positions qui sont disposées à des intervalles égaux dans une première direction autour d'une circonférence,
**caractérisé en ce que** l'empilage comprend les étapes consistant à :
déplacer vers le haut et vers le bas les unités d'aspiration (HA, HB, HC, HD) qui sont arrivées à la première position (P1), la deuxième position (P2) et la troisième position (P3) pour respectivement saisir une première feuille d'électrode (61), un séparateur (65) et une deuxième feuille d'électrode (62), et déplacer vers le haut et le bas de l'unité d'aspiration (HA, HB, HC, HD) qui est arrivée à la quatrième position (P4) pour empiler un séparateur (65) ;
faire tourner la pluralité d'unités d'aspiration (HA, HB, HC, HD) dans la première direction et déplacer vers le haut et vers le bas l'unité d'aspiration (HA, HB, HC, HD) qui est arrivée à la quatrième position (P4) pour empiler une deuxième feuille d'électrode (62) ;
faire tourner la pluralité d'unités d'aspiration (HA, HB, HC, HD) dans la première direction, déplacer vers le haut et vers le bas l'unité d'aspiration (HA, HB, HC, HD) qui est arrivée à la deuxième position (P2) pour saisir un séparateur (65), et déplacer vers le haut et vers le bas l'unité d'aspiration (HA, HB, HC, HD) qui est arrivée à la quatrième position (P4) pour empiler un séparateur (65) ; et
faire tourner la pluralité d'unités d'aspiration (HA, HB, HC, HD) dans la première direction et déplacer vers le haut et vers le bas l'unité d'aspiration (HA, HB, HC, HD) qui est arrivée à la quatrième position (P4) pour empiler une première feuille d'électrode (61).

7. Procédé selon la revendication 6,
dans lequel le déplacement vers le haut et vers le bas comprend les étapes consistant à :
déplacement simultané vers le haut et vers le bas la pluralité d'unités d'aspiration (HA, HB, HC, HD) via une unité de prise (50) qui comprend la pluralité d'unités d'aspiration (HA, HB, HC, HD) ; et
déplacer séparément vers le haut et vers le bas les unités d'aspiration (HA, HB, HC, HD) qui saisissent ou empilent en synchronisation avec le déplacement simultané vers le haut et vers le bas.
